Europäisches Patentamt

European Patent Office

Office européen des brevets

(11) Publication number: **0 493 679 A2**

# EUROPEAN PATENT APPLICATION

(21) Application number: **91120228.1**

(22) Date of filing: **27.11.91**

(51) Int. Cl.⁵: **G02B 6/44**, G02B 7/00

(30) Priority: **03.12.90 US 620699**

(43) Date of publication of application:
**08.07.92 Bulletin 92/28**

(84) Designated Contracting States:
**CH DE ES FR GB GR IT LI NL SE**

(71) Applicant: **Hughes Aircraft Company**
**7200 Hughes Terrace**
**Los Angeles, California 90080-0028(US)**

(72) Inventor: **LeCompte, George W.**
**8620 N. Pomona Road**
**Tucson, California 85704(US)**
Inventor: **Rochester, James R.**
**4551 Camino Gacela**
**Tucson, Arizona 85718(US)**

(74) Representative: **Witte, Alexander, Dr.-Ing. et al**
**Augustenstrasse 7**
**W-7000 Stuttgart 1(DE)**

(54) **Filament air bearing.**

(57) An air bearing (10) for guiding a filament (16) (e.g., optical fiber) has two circular disks (20, 22) each with etched radial channels (32) on one major surface, which are sandwiched to opposite sides of a separator (36). The assembly of disks (20, 22) and separtor (36) is mounted into an axial support (18) which supplies pressurized air to a plenum (54) between the disks (20, 22). The air passes along the channels (32) to be emitted into a groove at the peripheral edges (28) of the disks (20, 22) forming a supporting air cushion for the filament (16).

FIG. 2

## BACKGROUND OF THE INVENTION

### 1. Field of the Invention

The present invention relates generally to an air bearing for supporting a filament such as an optical fiber without physically contacting the filament with the bearing while the filament is moved in a direction along the filament longitudinal axis.

### 2. Description of Related Art

Filaments, such as optical fibers, for example, have been conventionally transported along a desired path by the use of grooved rollers or pulleys in which the fiber would be received within a grooved periphery of a pulley and moved by frictional engagement with the groove walls. In many situations the substantial friction created by filament contact pulley is undesirable. Also, a major problem results when particulate matter contaminants collect on pulley running surfaces and penetrate the relatively compliant outer surface of the optical fiber producing minute scratches on the glass core which causes reduced optical transmission efficiency of the fiber as well as reduced mechanical reliability. By way of explanation, the outer coating or buffer of a typical optical fiber can easily be penetrated by foreign particles resulting, for example, if these particles were lodged in a pulley groove, in a continuing sequence of punctures to the fiber buffer.

In addition to frictional tension produced in an optical fiber by a conventional pulley, there is also a further amount of fiber tension that results from pulley inertia. It is well known that an optical fiber is highly sensitive to tensile stresses which can result in either complete destruction of the fiber (e.g., breakage) or substantial reduction in its optical signal transmission efficiency.

A copending U.S.patent application Serial No. _____, AIR BEARING FOR AN OPTICAL FIBER by G. W. LeCompte, assigned to the same assignee as the present application, discloses an air bearing consisting of an outer layer having an open-bottom channel formed in its surface, which channel is so dimensioned as to permit receipt of the fiber therein. This outer layer is sandwiched with a second layer having grooves formed in the surface contacting the outer layer which form passageways to admit pressurized air establishing an air cushion to support the fiber. The bearing of that patent was primarily concerned with band stressing a fiber for test purposes and is relatively complex to construct.

## SUMMARY OF THE INVENTION

Two identical circular disks each have a surface provided with a plurality of etched radial channels extending from a central axial opening to the outer peripheral edge of the disk. The disks are assembled onto a circular separator having a diameter slightly less than that of either of the two disks. The peripheral edge of the separator is formed into a curved recess of sufficient curvature to accommodate a filament, such as an optical fiber, received therein. The facing outer edge portions of the two disks are tapered outwardly thereby forming a single continuous peripheral recess having a relatively wide entrance that bottoms into the curved separator recess. A central support is received within the axial opening of the two disks and separator and includes a longitudinally extending cavity and a plurality of exit passages located immediately opposite the separator. Pressurized air is passed along the central support cavity and out the exit passages to enter an air plenum formed between the two disks and separator. The pressurized air from the plenum passes along the radial channels to exit into the recess on both sides of the separator and between the separator and adjacent disk forming the air cushion on which the filament is supported.

In operation, with pressurized air added through the central support cavity and exiting into the recess of the bearing, a filament located in the recess is buoyed up and held spaced from the separator and the disks by a cushion of air such that the filament may be moved along the surface of the bearing without coming into direct physical contact with the various parts and be damaged. More particularly, there are provided two sources of pressurized air, one on each side of the separator, which acts to produce an automatic centering of the fiber within the separator recess and between the disks.

## DESCRIPTION OF A PREFERRED EMBODIMENT

In the accompanying drawing:
FIG. 1 is a perspective view of the air bearing of the present invention shown accommodating a filament therein;
FIG. 2 is a side elevational sectional view taken along the line 2-2 of FIG. 1;
FIG. 3 is a further elevational sectional view taken along the line 3-3 of FIG. 2;
FIG. 4 is a sectional elevational view of an alternate embodiment;
FIG. 5 is a graph of bearing pressure versus position in the bearing of FIG. 2; and
FIG. 6 is a side elevational view of a pair of bearings in accordance with the present invention used to maintain a fiber on a straight path.

## DESCRIPTION OF A PREFERRED EMBODIMENT

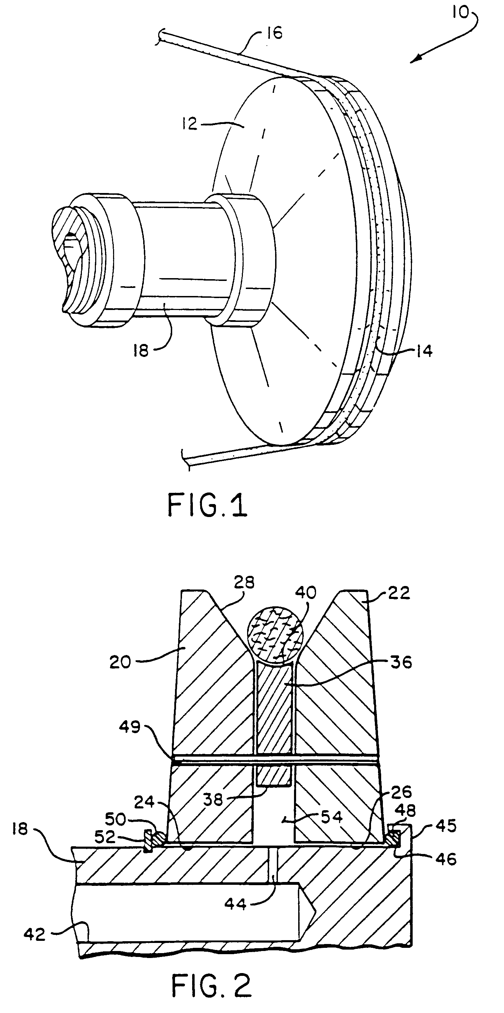

With reference now to the drawings and particularly FIG. 1, the air bearing of the present invention is enumerated generally as 10 and is seen to include a substantially cylindrical disk-like body member 12 having a peripheral circumferential groove 14 within which a filament 16, such as an optical fiber, can be received and redirected along a different path. More particularly, as will be set forth in detail, the groove 14 is connected to a source of pressurized air (not shown) so that the fiber is at all times while in the bearing supported upon an air cushion and in that way prevented from coming into direct physical contact with any bearing surface. An axial support 18 is secured to one major face of the body member 12 at its center and, in addition to physical support, serves as a conduit for the pressurized air to the active locations in the bearing.

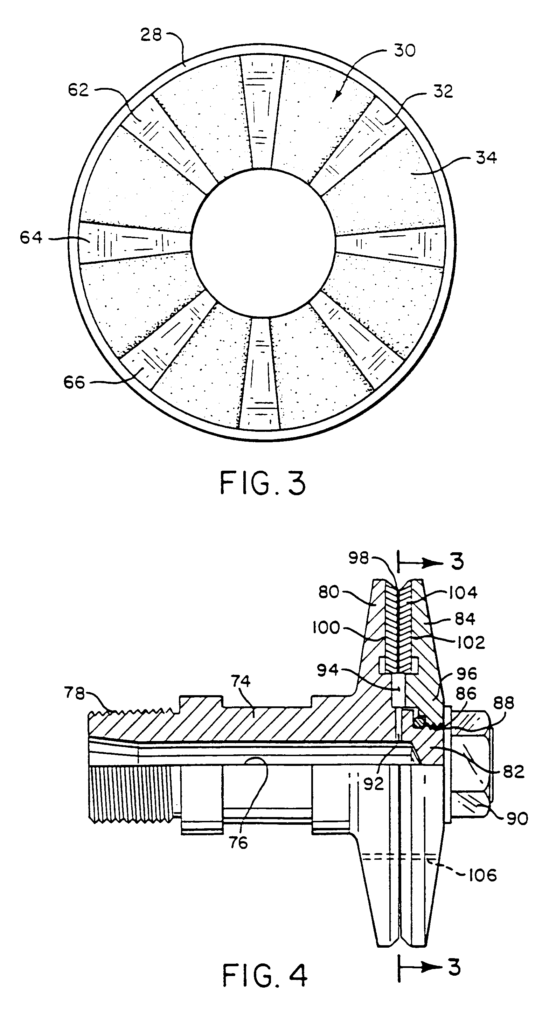

For the ensuing detailed description of the invention, reference is made simultaneously to FIGS. 2 and 3. The bearing includes first and second circular disks 20 and 22 of substantially identical overall geometry and dimensions each having an enlarged circular opening located at the disk center enumerated 24 and 26, respectively. Also, each disk has an outer edge portion 28 which is tapered. As can be best seen in FIG. 3, one major surface 30 of the disk 20 extending from the outer edge of opening 24 to the beginning of the tapered edge portion 28 has a plurality of generally pie-shaped channels 32 formed therein and separated by similarly shaped pie-shaped lands 34. The outermost surfaces of the lands 34 lie in a common flat plane.

A separator 36 consists of a solid circular disk-like body having a central circular opening 38 that is slightly larger than the openings 24 and 26 in the disks 20 and 22. The circumferential periphery of the separator is provided with a smoothly curved recess 40 of cross-sectional curvature enabling sliding receipt of the fiber therealong and not presenting a surface configuration that will snag or entrap the fiber. The outer diameter of the separator is substantially equal to the diameter of the disk as measured from the center to the lowermost reach of the tapered edge portion 28.

The central support 18 comprises a generally cylindrical rod of outer diameter such as to provide a close snug fit when slidingly received within the disk openings 24 and 26. The support also includes an axially extending passage 42 which communicates with the exterior at one end of the support and terminates at a position short of the opposite support end that aligns with the separator 36 on bearing assembly. A plurality of radially extending openings 44 communicate with the central passage and open outwardly in a plane generally 90 degrees to the support central axis. An enlarged flange 45 on an outer end of the support 18 includes a groove 46 facing backwardly along the support shaft within which a circular seal 48 (e.g., O-ring) is positioned.

In assembly, the bearing disk 22 has its central openings 26 received on the central support 18 and is sealingly pressed against the seal 48 and the channels 32 face away from the flange. Next, the separator 36 is secured onto the channel carrying face of the disk 22 with the separator outer edge being located precisely at the termination of the tapered edge portion of the disk. One or more locating pins 49 passing through the disks 20, 22 and the separator 36 provide assembly unity. Depending upon the material used for making the disks and the separator, securement of the two may be effected by soldering or by use of an epoxy. Finally, the second bearing disk is slidingly received onto the central support in the same manner with its channel face being secured to the opposed surface of the separator. A further sealing means 50, such as an O-ring, is received onto the central support outwardly of the disk 20 and is edge supported by a snap ring 52 to hermetically seal the small space that may exist between the disk and the central support.

In use, pressurized air is passed along the central support passage 42 and outwardly through the radial opening 44 into an air plenum 54 from which the air moves along the channels in the disks to be emitted between the disks and the separator. In this way an air cushion is produced in groove 14 on which the optical fiber is supported in spaced relation to the disk tapered wall surfaces as well as from the separator.

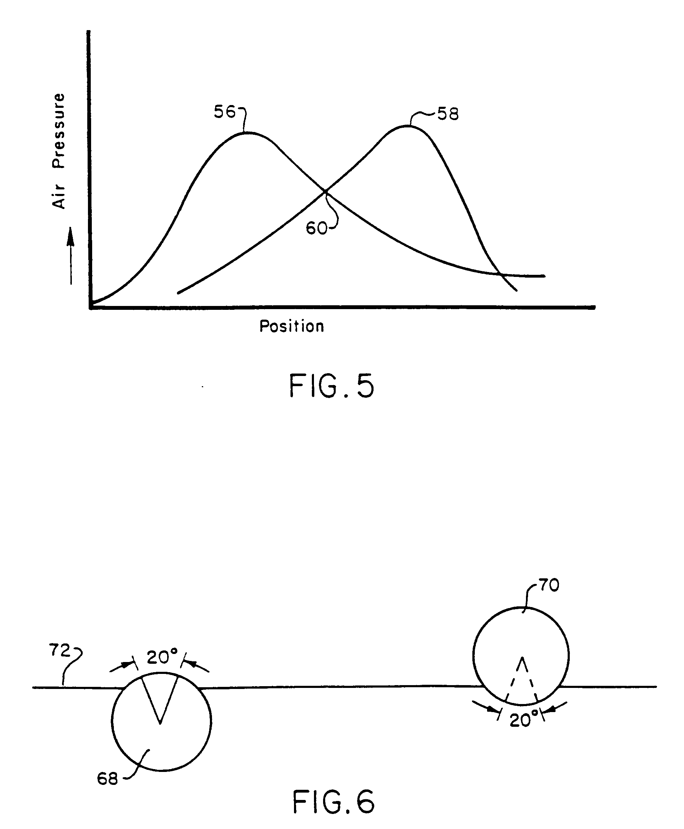

With reference now to the graph shown in FIG. 5, it is seen that the air pressure in the bearing has two substantially identical maximum values 56 and 58 located just above (or opposite) the air entrance spaces between disk 20 and the separator 36 and between the separator and disk 22, respectively. In between these maximum values the pressure drops off uniformly to a minimum value 60 at the midpoint. By this distribution of pressure, the fiber will be maintained tracking the centerline of the separator peripheral recess. For example, if a sideways force is experienced by the fiber tending to move the fiber closer to one of the bearing air entrances the pressure will automatically rise forcing the fiber back to its more central location.

Although as shown in FIG. 3, pie-shaped channels 32 are provided throughout a full 360 degrees, in many cases this may not be necessary. For example, a 180 degree set of channels may be sufficient, in which case the channels enumerated 62, 64 and 66 may be either blocked or not formed into the disk face originally. In either case, pressurized air will now only be emitted into the bearing by those channels other than 62, 64 and 66. It is contemplated any angular set of active channels less than 360 degrees may be provided, as desired.

Illustrative of use of active bearing surfaces that are less than 360 degrees, there are shown in FIG. 6 two bearings 68 and 70 constructed as described herein with approximately 20 degrees of active bearing surfaces each. The bearings are located on opposite sides of a fiber 72 with the 20 degree active bearing surfaces facing the fiber which serves to keep the fiber tracking along a substantially straight line path.

FIG. 4 depicts a further embodiment of the invention. An elongated generally cylindrical support 74 has a passage 76 extending from an outer threaded end 78 to an enlarged flange or plate 80 at the other end. A reduced diameter hub 82 integral with the plate 80 extends outwardly of the plate along the cylindrical axis of the support 74. A further plate 84 of diameter substantially the same as plate 80 has a central opening 86 of such dimension as to enable receipt onto the hub leaving an outer hub end portion which is threaded at 88. A nut 90 secures plate 84 onto the hub 82 into unitary relationship.

One or more transverse passageways 92 extend through the wall of support 74 communicating passage 76 with a continuous annular plenum 94 formed between the facing surfaces of plates 80 and 84. An O-ring 96 prevents air leakage outwardly between the hub and plate 84.

The facing surfaces of the plate 80 and 84 are set back from each other outwardly of the plenum 94 forming an annular space 98. A pair of disks 100, 102 and a separator 104 sandwiched between are mounted in the space 98, which disks and separator can be the same as the previously described disks 20, 22 and separator 36 shown in FIG. 3. A pair of press pins 106 (only one is shown) passing through the plates 80 and 84, disks 100 and 102, and separator 104 hold the parts in unitary assembly.

It is to be understood that full use of modifications, substitutions, and equivalents may be made without departing from the scope of the invention as disclosed herein.

**Claims**

1. A bearing for directing a filament (16) along a predetermined path, comprising disklike body means (20, 22; 100, 102) having an opening (26, 54; 94) therein and curved recess means (14; 28, 40; 98) on a peripheral edge of the disklike body means (20, 22; 100, 102) for receiving the filament (16), characterized by:

   - a plurality of channel means within the body means (20, 22; 100, 102) extending from the opening (26, 54; 94) to the curved recess means (40; 98); and
   - means (18, 42, 44; 74, 76, 92) for interconnecting a source of supply of pressurized air to the opening (26, 54; 94) to pass the air along the channel means and outwardly into the curved recess means (40; 98) and form an air cushion for supporting the filament (16).

2. The bearing of claim 1, characterized in that the disklike body means (20, 22) includes a circular separator plate (36) with a continuous curved recess (40) in the plate edge, first and second circular disks (20, 22) of identical diameters larger than the separator diameter, said separator plate (36) and circular disks (20, 22) having axial openings (26, 38); the separator plate (36) being assembled between the first and second circular disks (20, 22) with the channel means (32) being formed on the surfaces of said disks (20, 22) facing the separator plate (36).

3. The bearing of claim 2, characterized in that the outer edge portions (28) of the circular disks (20, 22) facing the separator plate (36) are tapered forming smooth interconnections with the separator plate edge recess (40).

4. The bearing of claim 2 or 3, characterized in that the channel means include a plurality of generally pie-shaped channels (32) formed in the surfaces of the first and second disks (20, 22) facing the separator plate (36), adjacent channels (32) being spaced apart by lands (34) which are secured to the separator plate (36).

5. The bearing of any of claims 1 through 4, characterized in that the interconnecting means includes a cylindrical member (18; 74) having an axial passage (42; 76) with a plurality of radially extending openings (44; 92).

10

16

12

18

14

**FIG.1**

28  40  22

20

36

49

24  38  26

18  50  54  48  45

52  46

44

42

**FIG. 2**

FIG. 3

FIG. 4

FIG.5

FIG.6